# EUROPEAN PATENT APPLICATION

(11) **EP 3 624 283 A1**
(43) Date of publication of application: **18.03.2020**
(21) Application number: 18194187.3
(22) Date of filing: 13.09.2018
(51) Int. Cl.: H02G 3/04

(54) **PROTECTING ELONGATED ELEMENTS**

(71) Applicant: Koninklijke Philips N.V., 5656 AG Eindhoven (NL)
(72) Inventor: VOGTMEIER, Gereon, 5656 AE Eindhoven (NL)
(74) Representative: de Haan, Poul Erik

(57) **Abstract**

A system (450) comprises protection elements (451-456), each comprising a hollow body having at least two apertures at two ends of the hollow body, a slit (461, 462) extending between the two apertures through which an elongated element (400) can be inserted inside the hollow body. A protection element has a coupling member having at least a curved surface and a first aperture for coupling with another protection element of the system. The other protection element comprises a socket having a further aperture and a curved inner seat for matching the curved outer surface so that the coupling member can snap through the second aperture into the socket for mating the curved surface with the curved inner seat. The protection elements can rotate relative to each other via the mated curved surface so as that a modular system of individually connectable and replaceable protection elements can be shaped as desired.

## Description

### FIELD OF THE INVENTION

The invention relates to a system for protecting elongated elements, e.g. electrical cables, and to a protection element for use in said system. The invention further relates to a method of assembling such a system.

### BACKGROUND OF THE INVENTION

Electrical devices are often electrically connected by means of elongated elements such as for example, metal tracks on printed circuit boards or electrical cables, especially when the electrical devices need to be electrically connected at some distance between each other. Electrical devices may be electrically connected with each other for example by the use of electrical cables or by cables connected at their ends to electrical interfaces, e.g. plugged in the electrical devices. Electrical cables are used in many different versions, diameters, and flexibility. It can occur that an electrical device needs replacement or maintenance, or simply to be disconnected temporarily. In this case, in order to remove the device, the electrical interface or the electrical cable is often unplugged and the electrical cables are abruptly moved.

The electrical cables may get damaged if for example the movement of the cables causes a sudden small bending radius of the cable or the movement is in a direction that is not allowed. Such replacement or maintenance operation would have the risk of damaging or destroying the electrical cable.

For example, in magnetic resonance imaging (MRI) devices, body coils are applied to the patient each time a scan is made with the device. These body coils are connected via electrical cables at a cable housing. Each time the body coils are applied or removed from the patient body, the cables may be bended and damaged at the cable housing. Most of these cable housings are either not flexible or not protective enough or not easy to replace without dismounting the cables.

In US2016/0149385A1, an electrical wire protection member is disclosed which protects electrical wires from being damaged. The wire protection member includes a wire protection tube which has flexibility and which has a locking feature which is molded on the tube. The molded locking feature allows to safely attach the wire protection tube to an attachment hole so as to prevent that the tube is damaged while it is tightly attached with, for example, a binding band instead.

However, in US2016/0149385A1 the tube has a predetermined flexibility which is depending on a geometry of the tube and material used and cannot be adapted to any kind of cable's size and shape.

In addition, the wire protection member of US2016/0149385A1 is not easily mountable or replaceable because the cable should be inserted or removed from one end of the wire protection tube. The tube should be still adapted to the wire length, for example by cutting the tube to the desired length of the wire.

### SUMMARY OF THE INVENTION

There is thus a need for a protection solution of electrical wires that allows an easier installation and replacement of the protection.

It is an object of the invention to provide a system for protecting an elongated element, a protection element for use in said system and a method of assembling such system that solve at least one of the aforementioned problems of the prior art. According to an aspect of the invention a system is provided as defined in claim 1. According to a further aspect of the invention there are provided protection elements for use in the system as defined in claims 11 and 12. According to a further aspect of the invention there is provided a method of assembling the system as defined in claim 14.

The claimed features have the effect that the system is modular. The system contains a plurality of protection elements that can be connected between each other by snapping a coupling member of a protection element into a socket of another protection element. Advantgeously, using a slit provided, an electrical wire or any other elongated element can be inserted inside the protection element. The protection elements can thus be mounted in-situ to protect pre-installed, electrical wire or electrical wire harness without disconnecting the wire or wire harness because the wire or wire harness can be inserted inside each protection element through the slit.

Advantageously, the proposed system provides protection elements with coupling members having curved outer surfaces and with sockets having matching curved inner seats such that when two protection elements are connected to each other, the curved outer surface of the coupling member can mate the inner curved seat of the socket. The protection elements can rotate relative to each other via the mated curved outer surface. The protection elements of the invention can rotate with respect to each other thereby angularly guiding the elongated element when the elongated element is bending, thereby considerably reducing the risk of rupture of the elongated element.

In an embodiment, the coupling member and the socket may have matching curved shapes, e.g. a spherical, elliptical, rounded, cylindrical, conical or truncated conical shape. The coupling member and the socket may have any shape suitable for the specific implementation which allows a certain degree of rotation of a protection element relative to another protection element connected thereto.

In an embodiment, the coupling member and the socket have a spherical shape and form a ball joint when the coupling member is snapped into the socket.

In an embodiment, the coupling member has one or more guiding elements and the socket has one or more receiving elements for receiving the guiding elements of the coupling member. Via the guiding elements and corresponding receiving elements, rotation of the first protection element relative to the second protection element may be limited about one or more predetermined axes of rotation.

For example, in one embodiment, the guiding elements may be pins protruding from the curved outer surface of the coupling member and the receiving elements are grooves provided in the socket for inserting the pins.

By providing the coupling members with guiding elements and the sockets with receiving elements, bending of an elongated element can be prevented about any axis different from the one or more predetermined axis of rotation. Bending of the elongated elements about any forbidden axis which would cause damage of the elongated element has been prevented.

Another aspect of the invention provides a protection element for use in a system of protection elements.

The protection element may comprise at one end a socket or a coupling member that can be coupled to a coupling member or socket of another protection element of the system.

In an embodiment, the protection element may comprise a socket or a coupling member at both ends or a socket at one end and a coupling end at the other end.

Another aspect of the invention provides a method of assembling a system of protection elements.

Further preferred embodiments of the devices and methods according to the invention are given in the appended claims, disclosure of which is incorporated herein by reference.

### BRIEF DESCRIPTION OF THE DRAWINGS

These and other aspects of the invention will be apparent from and elucidated further with reference to the embodiments described by way of example in the following description and with reference to the accompanying drawings, in which
Figure 1 shows a perspective view of an embodiment of a protection element,
Figure 2 shows a perspective view of an embodiment of a protection element,
Figure 3 shows a perspective of an embodiment of a system of protection elements,
Figure 4 shows a schematic view of an embodiment of a system of protection elements,
Figure 5 shows a perspective view of an embodiment of a protection element,
Figure 6 shows a perspective view of an embodiment of a protection element, and
Figure 7 shows a perspective of an embodiment of a protection element,
Figure 8 shows a cross section of an embodiment of a protection element,
Figure 9 shows a method of assembling a system of protection elements.

The figures are purely diagrammatic and not drawn to scale. In the Figures, elements which correspond to elements already described may have the same reference numerals.

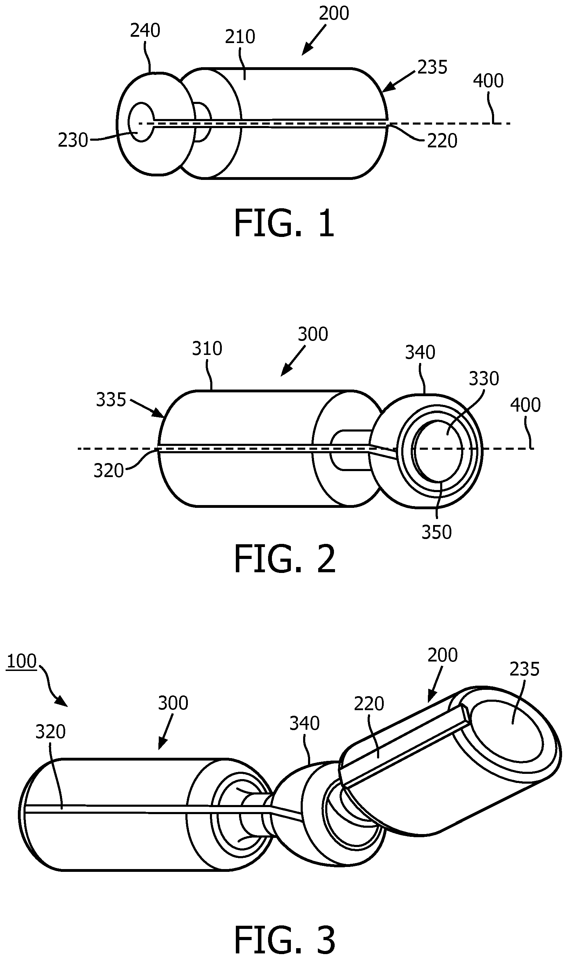

### List of reference numerals in Figures 1-8

- 100, 450: a system of protection elements
- 200, 201, 300, 301, 451-456, 500, 603: a protection element
- 210, 310, 504: a hollow body
- 220, 320, 461, 462, 520, 622: a slit
- 230, 235, 330, 335, 530: an aperture
- 240, 241, 540: a coupling member
- 260, 261: a pin
- 290: an axis of rotation
- 340: a socket
- 350: a curved inner seat
- 360, 361: a groove
- 400: an elongated element
- 505, 506: an end
- 510: a further hollow body
- 521: a further slit
- 550: an inner side wall
- 560: an outer side wall
- 670: a flexible flap

### DETAILED DESCRIPTION OF EMBODIMENTS

This invention is susceptible of embodiment in many different forms, some of which are shown in the drawings and will herein be described in detail one or more specific embodiments, with the understanding that the present disclosure is to be considered as exemplary of the principles of the invention and not intended to limit the invention to the specific embodiments shown and described.

In the following a protection system and different type of protection elements for use in such a system are described. The system may comprise a plurality of such protection elements snapped into each other in order to protect elongated elements such as electrical wires or electrical wire harness, but also optical fibers or other types of elongated elements. The system is modular, it can contain one or more protection elements that can be independently mounted and replaced in the eventuality that one of them needs replacement e.g. gets damaged. Modularity makes the system easy to use and install: one protection element of the system can be connected to another protection element of the system at either one of its ends or at both ends with a sort of click system.

In particular, electrical wires or electrical wire harnesses may be used to connect different electrical parts within a single electrical device or different electrical devices together. When the connected electrical part or the connected electrical device needs replacement or maintenance, the electrical wires may be bended, causing wear of the wires and eventually damage thereof. This is especially true when the wires are torn or bended in a direction which is not allowed. For example, the electrical wire may be covered by some type of electrical insulating material which is resistant to bending in one or all directions. Excessive bending will cause rupture of the insulating material at the point of bending. This can cause that the electrical wire contacts other electrically conductive parts of the device thereby causing short circuits or malfunctioning of the device.

The protection elements of the invention can rotate with respect to each other thereby angularly guiding bending of the protected element, thereby reducing the risk of rupture of the wires. The protection elements can be mounted in-situ to cover pre-installed wire harness without disconnecting the wire harness if a slit along the elongated direction of the protection element is provided through which the wire can be inserted. Furthermore, the protection elements of the invention are not only modular but also scalable. They can be easily manufactured with three-dimensional printing technique and thus are easily scalable for the specific application.

**Figure 1** schematically shows a perspective view of an embodiment of a protection element 200. Protection element 200 may be used in a system including a plurality of similar protection elements for protecting an elongated element 400. Elongated element 400 may be for example an electrical wire or an electrical wire harnesses, but it is not limited to electrical elements, it may be an optical fiber or any other type of elongated element requiring protection. Protection of elongated elements means that the elongated elements are covered by such protection elements, thus protected from e.g. external atmospheric agents like water, humidity, dust or from contact with other nearby elements when the elongated element is e.g. moved. In particular, as it will be shown in detail later, the system of the invention is specifically intended to provide protection of elongated element against sudden bending of the elongated element that could cause its damage.

Protection elements 200 comprises in this respect a hollow body 210 having at least two apertures 230 and 235 (not directly visible from the perspective view of Figure 1) at two ends of hollow body 210. Hollow body 210 further comprises a slit 220 extending between the two apertures 230 and 235 through which an elongated element can be inserted therein or removed therefrom. Hollow body 210 can thus contain elongated element 400 which is inserted through slit 220 and can pass through apertures 230 and 235 along a longitudinal direction of elongated element 400.

Protection element 200 further comprises a coupling member 240 projecting in a longitudinal direction of protection element 200. Coupling member 240 has at least a curved outer surface and is provided with one aperture 230 of hollow body 210 through which elongated element 400 can pass. Coupling member 240 and its aperture 230 allow e.g. to couple protection element 200 with a further protection element of the system.

**Figure 2** shows a perspective view of an embodiment of such a further protection element 300. Further protection element 300 comprises a hollow body 310 having two apertures 330 and 335 of which only aperture 330 is visible in Figure 2 and a slit 320 extending between the two apertures 330 and 335. Similarly to protection element 200, also further protection element 300 is provided with slit 320 through which elongated element 400 can be inserted into hollow body 310 or removed from hollow body 310.

Protection element 300 further comprises a socket 340 provided with aperture 330, and a curved inner seat 350 which is matching with the curved outer surface of coupling member 240 shown in Figure 1. Coupling member 240 (shown in Figure 2) of protection element 200 can thus snap through aperture 330 into socket 340 such as that the curved outer surface of coupling member 240 is mated with the curved inner seat of socket 340. The curved surface of the coupling member and the seat match each other in order to allow a certain degree of rotation of protection element 200 relative to the further protection element 300.

Bending of the protection elements is guided via the joint formed by the outer surface of coupling member mated with the inner seat of the socket. Since bending is guided, the risk that an elongated element is damaged has been reduced because the elongated element suffers an abrupt bending as without the protection of the protection element. In fact the fact that the protection elements can rotate with respect to each other enhances flexibility of the system which can be mounted around elongated elements of various shapes and at the same time protects the elongated element from damages caused by abrupt bending.

In other words, the system enhances rigidity of the elongated element by providing around the elongated element a body that contains the elongated element, thus thicker than the elongated element. The body can bend but only to a lesser degree than the elongated element, because the body is in fact thicker than the elongated element that it contains.

In an embodiment, socket 340 may comprise snapping means (not shown in the Figures) to allow coupling member to snap into socket 340. For example, socket 340 may comprise a rim portion and coupling member 240 may comprise another corresponding rim portion matching the ring portion of the socket so that when coupling member 240 is fully inserted into socket 340 the two rims click or snap into each other. When snapped into each other, the two protection elements cannot be pulled away unless adequate pulling strength is exercised.

In an embodiment, the socket may be made slightly larger than the coupling member. For example, the coupling member can snap in to the socket and remain attached to it. For example, the coupling member may be made by a material which is softer than the material of which the socket is made. The material of the socket may be more rigid allowing the coupling member to be inserted in to the socket and remain attached thereto.

In an embodiment, coupling member 240 and socket 340 may have matching curved shapes, e.g. a spherical, elliptical, rounded, cylindrical, conical or truncated conical shape. Coupling member 240 and socket 340 may have any shape suitable for the specific implementation which allows a certain degree of rotation of protection element 200 relative to further protection element 300.

A hollow body in the context of this invention is any type of body comprising side walls surrounding an inner space suitable for containing a part of an elongated element. The protection element is wholly hollowed from an end to the other end of the hollow body between the two apertures to allow the passage of the (part of) elongated element.

In an embodiment, the hollow body may have a single surrounding side wall. In another embodiment, the hollow body may have double side walls, for example having more rigid inner walls to maintain a stronger and more stable inner construction and softer outer walls to facilitate handling and connection between different protection elements.

In an embodiment, the inner walls may be made of a first material and the outer walls of a second material. The second material may be softer than the first material.

In an embodiment, the hollow body may be formed with three-dimensional printing techniques, for example either using a single side wall structure or a double side wall structure as described above.

Slit 220 facilitates insertion and removal of elongated element 400 through slit 220. One or more elongated elements may be inserted through the slits of the respective protection elements. The protection elements may be connected to each other. Insertion may be further facilitated by a suitable choice of the materials forming the slit and the hollow body.

In an embodiment, protection element 200 is made of two materials, a first material and a second material. The second material may be softer than the first material. Protection element 200 may be made of the second material along and in proximity of slit 220. For example, the first material may be hard plastic, polyamide or even metal, while the second material may be a softer plastic, a resin or rubber. The first material which is more rigid than the second material ensures stability of protection element 200. The second material which surrounds slit 220 allows a user to put less pressure when inserting the elongated element into the hollow body or removing the elongated element from the hollow body through the slit. Risk that protection element 200 is damaged during insertion or removal of the elongated element is greatly reduced.

In an embodiment, the protection element may be made by a single material or a mixture of materials. The hollow body may have different thicknesses at different part of the hollow body. For example, the hollow body in proximity of the slit may be made thinner than the rest of the hollow body. For example, the hollow body may comprise a layer of material in proximity of the slit thinner than the layer of material covering all other parts of the hollow body. The hollow body in proximity of the slit is softer which means that an elongated element can be inserted more easily.

Alternatively, in another embodiment, the hollow body can be manufactured with layers of a material in a mesh-like manner. The manufacturing process may be designed such that the mesh is less dense in proximity of the slit and denser elsewhere.

In any of the embodiments described, the hollow body is well suited for beingmanufactured with three-dimensional printing techniques. With these techniques, geometrical parameters such as length, width, size of the single protection element in the system, meshing of the layers forming the hollow body can be accurately controlled.

**Figure 3** shows a perspective of an embodiment of a system 100 comprising protection elements 200 and 300 shown with reference to Figure 1 and 2, respectively.

In Figure 3 protection elements 200 and 300 are shown connected to each other. The coupling member of protection element 200 is snapped or inserted into socket 340. The coupling member and socket 340 form a ball joint which allows protection element 200 to rotate relative to protection element 300. Because a ball joint is used, protection element 200 can rotate relative to protection element 300 in any direction. The degree of rotation islimited by thickness of the hollow body of protection element 200 in proximity of the joint. In particular, rotation in a given direction will stop only when protection element 200 bumps on an external portion (rim) of socket 340 but otherwise protection element 200 is free to rotate in any direction relative to protection element 300. In other words, protection element 200 is free to pivot in any direction relative to protection element 300 through the ball joint.

Figure 3 further shows aperture 235 of hollow body 200 and slits 220 and 320.

It is noted that when protection elements 200 and 300 are connected to each other it is preferable that respective slits 220 and 320 are not aligned with each other. Thus after inserting an elongated element into slit 220 and slit 320, protection element 200 and 300 are connected to each other in a way that the respective slits have an angular offset. Offsetting the slits improves stability of the system especially when the chain comprises many protection elements as explained in an embodiment below. Furthermore, it is avoided that the elongated element accidentally exits the protection elements through the slits.

Advantageously, a modular system of protection elements is provided which can be easily assembled for example on an existing cables installation without the need of disconnecting the cables.

Each protection element of the system is a segment of the chain that can be designed with three-dimensional printing techniques. Thus the slit in each segment can be accurately positioned for optimizing the stability of the chain. This is particularly true for protection elements which include additional mechanical features which allow them to be connected to each other in a specific way as described in an embodiment below.

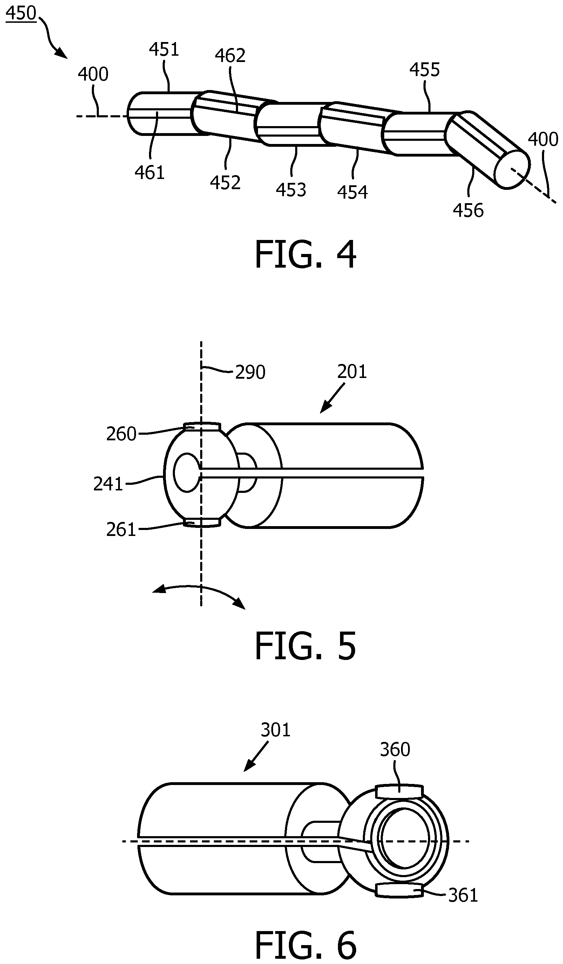

**Figure 4** shows a schematic view of an embodiment of a system 450 comprising protection elements 451-456. Protection elements 451-456 are arranged between each other so as to follow a path of elongated element 400. For example, elongated element 400 may be used in a device to connect different parts. Elongated element 400 may follow a particular path in the device due to the positioning of the various parts and space available in the device. Protection elements 451-456 connected into a chain follow the same path of elongated element 400. Each protection element is provided with a slit used to insert the protection element inside it. Protection element 451 is provided with slit 461, protection element 452 with slit 462 and so on. As shown in Figure 4, after inserting elongated element 400 inside each protection element 451-456, protection element 451-456 can be rotated along a longitudinal axis parallel to the slit so as that the slits of consecutive protection elements in the chain are not aligned with each other. This arrangement improves stability of the chain because protection elements 451-456 may be mechanically stronger in parts of protection elements 451-456 away from the slits. When the slits are not aligned it is avoided that mechanically weak parts are connected next to each along the longitudinal direction weakening robustness of the chain. Moreover, by misaligning the slits, it is avoided that elongated element 400 comes accidentally out of the slits, for example when the chain is bended according to a desired shape.

Protection elements 451-456 may additionally be provided with interface elements (not shown in Figure 4) to attach the protection elements to a housing or a wall. Such interface elements may be attached, glued or be provided with an adhesive layers to stick on an external surface of the protection element. The interface elements may provide support for the protection elements. The interface elements may fixedly attach the protection elements to the housing, wall or any other suitable surface.

**Figure 5** shows a perspective view of an embodiment of a protection element 201. Protection element 201 differs from protection element 200 in that that it has a different coupling member 241 provided with pins 260 and 261. Pins 260 and 261 are in this example symmetrically placed at two opposite sides of the coupling member 241. However, placement of the pins may be not symmetrical. Pins 260 and 261 are protruding from the outer surface of coupling member 241 so as to mechanically fit corresponding grooves 360, 361 of another protection element 301 shown in **Figure 6****.**

With reference to Figure 6, grooves 360 and 361 are provided in the socket of protection element 301. When pins 260 and 261 fit into grooves 360 and 361, rotation of protection element 201 relative to protection element 301 is limited in one direction. Rotation can occur about a specific axis of rotation 290 defined by the axis passing through the center of pins 260, 261 or grooves 360, 361.

Although the embodiment of Figure 5 and 6 has been described with reference to pins and grooves, it is to be understood that the coupling member can be provided with any kind of guiding elements, and the socket with any kind of corresponding receiving elements suitable for receiving the guiding elements of the coupling member and thereby limit rotation of a protection element relative to another about one or more predetermined axis of rotation.

In an embodiment, not shown, the socket may be provided with apertures instead of grooves, for example of elliptical or circular form, to allow the pins to rotate within the apertures.

In an embodiment, the socket may be provided with one or more additional apertures and the coupling member with or more additional corresponding pins to provide rotation about more axes of rotation.

In any embodiment, the socket and/or coupling member may be provided with stopping elements, like pins or projection features, for example protruding from an outer surface of the socket and/or coupling member, to further limit the angular rotation about a predetermined axis. Such stopping elements may be complementary in shape. The stopping elements may abut to each other when a bending angle of one protection element relative to another protection element exceeds a predetermined maximum value. For example, the maximum bending angle of the protection elements may be defined by the maximum bending angle specified for an elongated element.

Furthermore, when rotation of one protection element with respect to another is limited about one or more predetermined axis, bending of an elongated element can be prevented about any other axes different from the one or more predetermined axes. This for example can be used for preventing bending of the elongated elements in any forbidden direction which would cause damage of the elongated element.

If the angular rotation is limited by e.g. stopping elements, a maximum bending radius can be set to protect the elongated element from excessive bending in one or more predetermined directions, e.g. about one or more predetermined axis of rotation.

Although the protection elements described above have only a hollow body with two apertures, different type of protection elements are also contemplated. The protection elements may have three or more apertures. The protection elements may have a T shape, X shape or double T shape. The protection elements may have any shape suitable for the specific implementation. The protection elements may protect cables of different diameters, provide crossing of cables, etc. All basic shapes may be, for example, part of a module library of a design tool, e.g. a CAD software tool, and the functionalities could be added in a parameterized way. Parameters which could be used in such a module library are for example: cable diameter to determine the dimension of the protection element, angular tilt in x/y direction, inner space between inner wall of the hollow body and the cable, length of the protection element between the two apertures, min/max diameter of sphere connection when a ball-joint is used, etc.

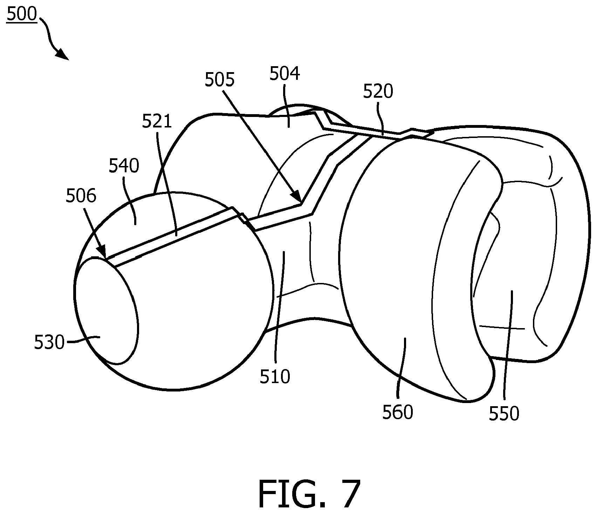

For example, **Figure 7** shows a perspective of an embodiment of a protection element 500 which is suitable for guiding crossing elongated elements.

Protection element 500 differs from protection element 200, 300, 300 and 301 in that it has a further aperture 530 for the passage of an elongated element. Protection element 500 has a T shape. One or more elongated elements can pass through the apertures at the three-ends of the T. Thus protection element 500 further comprises a further hollow body 510 having two further apertures at its ends 505 and 506. In Figure 7 only aperture 530 is visible. Protection element 500 further comprises a further slit 521 between the two further apertures. One end 505 of the further hollow body 510 is connected to hollow body 504, e.g. like shown in Figure 7 transversely, and other end 506 of further hollow body 510 has a further coupling member 540 for coupling with a corresponding socket of another protection element of the system.

The further hollow body may be provided at one end with a socket instead of a coupling member, for coupling with a corresponding coupling member of another protection element.

Hollow body 510 is suitable for guiding elongated elements which are transversely crossing the elongated elements passing inside hollow body 504 inserted through slit 520.

With reference to Figure 7, hollow body 504 has two sockets at both ends. However, hollow body 504 may have at both ends coupling members. Alternatively, hollow body 504 may have a coupling member at one end and a socket at the other end. Any combinations of coupling member and/or socket are possible.

As shown in Figure 7 hollow body 504 has inner side wall 550 and outer side wall 560. Inner side walls 550 and outer side walls 560 may be made of different material as explained in one of the embodiment above. Hollow body 504 is also provided with recessions or grooves at the end side of the socket so as to receive corresponding pins or protrusions of other protection elements which can be connected to it.

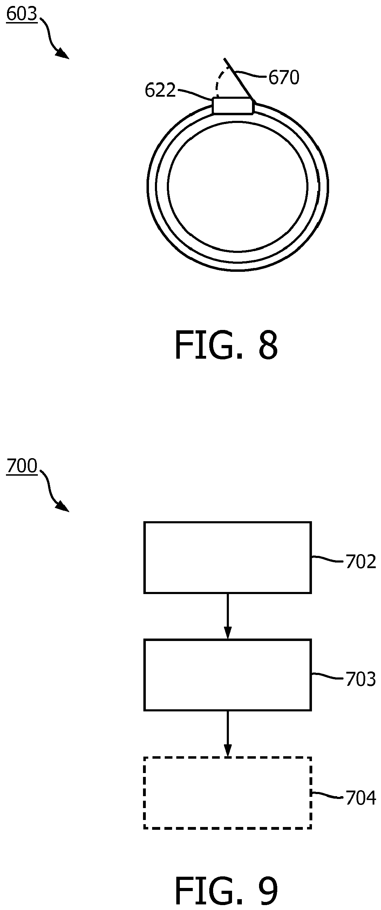

**Figure 8** shows a cross section of an embodiment of a protection element 603 along an elongated direction of protection element 603. The elongated direction is the direction along which protection element 603 extends.

Protection element 603 is provided with a slit 622 and with a flexible flap 670 for covering slit 622. Flexible flap 670 may be made of any flexible material suitable for the specific implementation, like rubber, thin plastic or resin, etc.

Flexible flap 670 may be lifted prior to inserting the elongated element as shown in Figure 8. Since flexible flap 670 is made of flexible, e.g. elastic material, flexible flap 670 will then return to its original position and cover slit 622.

Flexible flap 670 may provide a complete closure of slit 622 after elongated element is inserted through slit 622. A complete closure of slit 622 may for example provide further protection of the elongated element, for example against water, dust or other atmospheric agents.

In an embodiment (not shown) the flexible flap may be overlapping the slit from an inner side of the protection element. In this embodiment, the flexible flap is flexed towards an inner side of the protection element when the elongated element is inserted through the slit. The flexible flap will flex upwards and return to its original position once the elongated element has been inserted through the slit.

However, arrangements of the flexible flap are not limited to the examples described above. Additionally, the protection element may be provided with more than one flexible flap. For example, the protection element may be provided with two flexible flaps at both sides of the slit which overlap or align to each other when the flexible flaps are in a closed position.

**Figure 9** shows a method 700 of assembling a system of protection elements. The system may be that shown in Figures 3. The protection elements of the system may be any of the elements shown through the Figures 1, 2, 5, 6 and 7 or described in any of embodiment above. The system thus may comprise a first protection element and a second protection element. Both first and second protection element comprises each a hollow body having at least two apertures at two ends of the hollow body. The first protection element and the second protection element comprise a slit extending between the two apertures. The first protection element comprises a coupling member having at least an outer curved surface and a first aperture for coupling with the second protection element. The second protection element comprises a socket having a second aperture and a curved inner seat for matching the curved outer surface.

Method 700 comprises inserting 702 the elongated element through the slit of the first protection element and the second protection element, snapping 703 the coupling member through the second aperture into the socket for mating the curved outer surface with the curved inner seat and allowing the first protection element to rotate relative to the second protection member. Rotation occurs via the mated curved surface.

In an embodiment, rotating may be about one or more predetermined axes of rotation. For example, rotation may be facilitated by a combination of guiding and/or receiving elements or grooves/pins arranged in any one of the socket/coupling member which allow bending in one or more predetermined directions.

In an embodiment, method 700 may further comprise rotating 704 the first protection element relative to the second protection element about a longitudinal axis for angularly offsetting the slit of the first protection element from the slit of the second protection element. The longitudinal axis is the axis along which the first protection element and/or the second protection element extend.

Offsetting the slits improves stability of the system especially when the system comprises many protection elements.

Similarly, a method of de-assembling a system of protection elements is envisaged. Said method may comprise pulling away the first protection element from the second protection element for disconnecting the coupling member from the socket and removing the elongated element from the respective slit of the first protection element and second protection element. In this way protection elements may be re-used for protecting another elongated element when one device is e.g. dismissed.

It is noted that in the embodiments described, the slit can be an optional element. Many of the features described above and claimed in the dependent claims can be used advantageously even if no slit is provided.

It is noted that in this document the word 'comprising' does not exclude the presence of elements or steps other than those listed and the word 'a' or 'an' preceding an element does not exclude the presence of a plurality of such elements, that any reference signs placed between parentheses in the claims shall not be construed as limiting the claim, that the invention may be implemented by means of both hardware and software, and that several 'means' or 'units' may be represented by the same item of hardware or software. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. Further, the invention is not limited to the embodiments, and the invention lies in each and every novel feature or combination of features described above or recited in mutually different dependent claims.

## Claims

1. A system (100) for protecting an elongated element (400), comprising at least - a first protection element (200) and a second protection element (300), each comprising a hollow body (210, 310) having at least two apertures (230, 235; 330, 335) at two ends of the hollow body, the hollow body comprising a slit (220, 320) extending between the two apertures through which the elongated element can be inserted inside the hollow body or removed from the hollow body, wherein
the first protection element (200) comprises at a first end a coupling member (240) having a curved outer surface and a first aperture (230) for coupling with the second protection element (300), and
the second protection element (300) comprises at a second end a socket (340) having a second aperture (330) and a curved inner seat (350) for matching the curved outer surface so that the coupling member (240) can snap through the second aperture (230) into the socket (240) for mating the curved surface with the curved inner seat (350) and allowing the first protection element (200) to rotate relative to the second protection element (300).

2. A system according to claim 1, wherein the coupling member has one or more guiding elements and the socket has one or more receiving elements for receiving the guiding elements of the coupling member and limit rotation of the first protection element relative to the second protection element about one or more predetermined axes of rotation.

3. A system according to claim 2, wherein the guiding elements are pins (260; 261) protruding from the outer surface of the coupling member (241) and the receiving elements are grooves (360, 361) provided in the socket for inserting the pins.

4. A system according to any of the preceding claims, wherein the coupling member and the socket have matching spherical, elliptical, rounded, cylindrical, conical or truncated conical shapes.

5. A system according to claim 4, wherein the coupling member and the socket have a spherical shape and form a ball joint when the coupling member is snapped into the socket.

6. A system according to any of the preceding claims, wherein the first protection element and/or the second protection element further comprises a further hollow body (510) having two further apertures (530) at two ends (505, 506) of the further hollow body (510) and a further slit (521) between the further apertures, wherein one end (505) of the further hollow body (510) is connected to the hollow body (202) and the other end (506) of the further hollow body has either a further coupling member (540) or a further socket for coupling with a corresponding socket or coupling member of another protection element of the system.

7. A system according to any of the preceding claims, wherein the protection element (603) further comprises a flexible flap (630) for covering the slit (622).

8. A system according to any of the preceding claims, wherein the first protection element and/or the second protection element are made of a first material and a second material softer than the first material, wherein the protection element is made of the second material along and in proximity of the slit.

9. A system according to claim 8, wherein the first material and second material are one of metal, polyamide, plastic, resin or rubber.

10. A system according to any of the preceding claims, wherein the first protection element and/or the second protection element are formed by a doubled wall structure having inner walls (550) made of a first material and outer walls (560) made of a second material softer than the first material.

11. A protection element (200, 201) for use in the system of protection elements according to any of the preceding claims, comprising
- a hollow body (210) having at least two apertures (230, 235) at two ends of the hollow body,
- a slit (220) extending between the two apertures (230, 235) through which an elongated element (400) can be inserted inside the hollow body, and
- a coupling member (240) having at least a curved surface and a first aperture (230) for coupling with a further protection element (300, 301), and wherein the further protection element (300, 301) comprises a socket (340) having a further aperture (330) and a curved inner seat (350) for matching the curved outer surface so that the coupling member can snap through the second aperture (230) into socket (340) for mating the curved surface with the curved inner seat for allowing the protection element (200) to rotate relative to the further protection element (300).

12. A protection element (300) for use in the system of protection elements according to claims 1 to 10, comprising
- a hollow body (310) with two apertures (330, 335) at two ends of the protection element (300),
- a slit (320) extending between the two apertures (330, 335) through which an elongated element (400) can be inserted inside the hollow body (310), and
- a socket (340) having an aperture (330) and a curved inner seat (350) so that a coupling member (240) of a further protection element (200) of the system having at least a curved outer surface for matching the curved inner seat and a further aperture (230) so that the coupling member (240) can snap through the aperture (330) into the socket (340) for mating the curved outer surface with the curved inner seat (350) of the protection element (300) for allowing the further protection element (200) to rotate relative to the protection element (300).

13. A protection element according to any of the claims 11 or 12, wherein the hollow body is formed using three-dimensional printing techniques.

14. Method (700) of assembling a system of protection elements for protecting an elongated element, the system comprising a first protection element and a second protection element comprising each an hollow body having at least two apertures at two ends of the hollow body, wherein the first protection element and second protection element comprises an optional slit extending between the two apertures, wherein the first protection element comprises a coupling member having at least an outer curved surface and a first aperture for coupling with the second protection element, and wherein the second protection element comprises a socket having a second aperture and a curved inner seat for matching the curved outer surface, the method comprising
- inserting (702) the elongated element through the slit of the first protection element and the second protection element,
- snapping (703) the coupling member through the second aperture into the socket for mating the curved outer surface with the curved inner seat and allowing the first protection element (200) to rotate relative to the second protection element (300).

15. Method (700) according to claim 14, further comprising rotating (704) the first protection element relative to the second protection element about a longitudinal axis for angularly offsetting the slit of the first protection element from the slit of the second protection element.
